# EUROPÄISCHE PATENTSCHRIFT

(11) **EP 1 235 676 B1**
(45) Veröffentlichungstag und Bekanntmachung des Hinweises auf die Patenterteilung: **16.07.2003**
(21) Anmeldenummer: 00977525.5
(22) Anmeldetag: 10.11.2000
(51) Int. Cl.: B29C 47/00, B29C 47/38, B29C 47/82

(54) **EXTRUDER ZUR AUFBEREITUNG VON KAUTSCHUKMISCHUNGEN**
EXTRUDER FOR PREPARATION OF RUBBER MIXTURES
EXTRUDEUSE SERVANT AU TRAITEMENT DE MELANGES DE CAOUTCHOUC

(30) Priorität: 13.11.1999 DE 19954653
(43) Veröffentlichungstag der Anmeldung: 04.09.2002
(73) Patentinhaber: Berstorff GmbH, 30625 Hannover (DE)
(72) Erfinder: RÖTHEMEYER, Fritz, 30916 Isernhagen (DE)
(74) Vertreter: Zollner, Richard
(86) Internationale Anmeldenummer: EP0011131
(87) Internationale Veröffentlichungsnummer: WO01036175

(56) Entgegenhaltungen:
- EP-A- 0 798 097
- DE-A- 4 235 430
- US-A- 4 365 946

## Beschreibung

Die Erfindung betrifft einen Extruder und ein Verfahren zur Aufbereitung von Kautschukmischungen gemäß dem Oberbegriff der Patentsansprüche 1 bzw. 9.

Bei der Herstellung von Elastomerprodukten wird zur Qualitätssicherung ein weitgehend gleichmäßiger Vernetzungsgrad während des Vulkanisationsprozesses angestrebt. Dabei sollte der Unterschied zwischen der Temperatur des Extrudates und der Temperatur des Vulkanisationsmediums nicht zu groß sein. In der Praxis wird das den Extruder verlassende Extrudat von etwa 70° - 100°C auf hohes Anfangstemperaturniveau zu Beginn der Vulkanisation von etwa 130° - 180°C gebracht.

Hierfür kann das Scherkopfverfahren zum Einsatz kommen, bei dem mechanische Energie eines rotierenden Scherdornes für eine Temperaturerhöhung des Extrudates genutzt wird.

Weiterhin besteht die Möglichkeit, die UHF-Technologie einzusetzen, die jedoch eine aufwendige Rezepturgestaltung, insbesondere bei Mischungen auf Basis unpolarer EPDM-Polymere erfordert.

Aus dem Stand der Technik, EP 798 097, ist weiterhin ein Extruder bekannt, der eine Drossel besitzt, die durch eine von gemessener Ausgangsextrudattemperatur, -dichte und -gewicht ausgehende Rückkopplungssteuerung angetrieben wird. Diese Drossel umfasst einzelne, von außen radial durch die Extruderzylinderwand reichende Dorne, die durch einen außenliegenden Nockenring angetrieben werden. Durch Verändern der Eingreiflänge dieser Dome in den Extruderinnenraum kann der auf das zu fördernde Extrudat wirkende Scherwiderstand stufenlos angepasst werden. Die erwünschte Extrudattemperatur kann somit in Abhängigkeit von den Betriebsparametern eingestellt werden. Hierbei handelt es sich um eine sehr aufwendige Konstruktion, die sowohl über einen speziellen Extruderzylinder verfügen muss, durch den die Drosseldome von außen regelbar eingreifen können, als auch über eine speziell gefertigte Schnecke.

Diese Apparatur dient der Aufrechterhaltung einer gewünschten, optimalen Extrudattemperatur, es ist aber nichts darüber ausgesagt, ob hierbei die Vulkanisationstemperatur erreicht werden soll.

Des weiteren sind Apparaturen bekannt, bei denen im Anschluss an einen Extruder mit Extruderschnecke ein Scherkopf rotationsfest mit der Schnecke verbunden ist, während das ihn umgebende und dichtend an den Extruderzylinder anschließende Gehäuse entgegengesetzt zur Schneckendrehrichtung rotierbar ist. Durch die stufenlos regelbare Rotationsgeschwindigkeit des Gehäuses können die auf das Extrudat wirkenden Scherkräfte gezielt beeinflusst werden und somit dessen Temperatur. Dies wird in der US 4,365,946 zur Anhebung der Temperatur einer Kautschukmischung auf die Vulkanisationstemperatur verwendet.

Ein Nachteil der beiden zuvor geschilderten Apparaturen liegt im komplexen Aufbau, sowie darin, dass die Elemente zur Erhöhung der Extrudattemperatur jeweils verzahnt mit dem Extruder ausgeführt werden, woraus sich ergibt, dass existierende Extruder nicht umgerüstet werden können.

Der Erfindung liegt die Aufgabe zugrunde, zur Sicherstellung einer gleichmäßigen Vernetzung des Kautschuks, dessen Temperatur auf annäherndes Vulkanisationsniveau zu bringen.

Erfindungsgemäß wird dies im Extruder erreicht, indem die Extruderschnecke derart ausgebildet ist, dass die Kautschukmischung auf ihrem Weg zum Extrusionswerkzeug durch Wärmedissipation eine Temperaturerhöhung erfährt, so daß eine Annäherung der Temperatur des Extrudates an die Vulkanisationstemperatur erfolgt.

Die Erfindung ist mit dem Vorteil verbunden, daß auf komplizierte Einrichtungen, wie Scherkopf- oder UHF-Einrichtungen, zur Temperaturerhöhung nach Extruderaustritt verzichtet werden kann.

in zweckmäßiger Ausgestaltung der Erfindung ist die Extruderschnecke in Abhängigkeit von deren Durchmesser mehrgängig ausgebildet, wobei die Gangzahl bei Vergrößerung des Durchmessers der Schnecke steigt. Bevorzugt werden Gangsteigungswinkel und Gangtiefe der Schnecke derart gewählt, daß im Extruder einer Eingangszone ansteigenden Druckes eine Ausgangszone mit Druckkonstanz oder Druckabfall folgt.

Dabei kann die Extruderschnecke als Minderleistungsschnecke mit kleinem Gangsteigungswinkel ϕ in der Ausgangszone, vorzugsweise im Bereich von ca. 7° bis 14°, ausgeführt sein.

Alternativ zu oder in Kombination mit einem kleinen Gangsteigungswinkel ϕ besteht die Möglichkeit, die Ausgangszone der Extruderschnecke mit einer kleinen Gangtiefe H zu versehen. So hat es sich als zweckmäßig erwiesen, die Gangtiefe H < 0,15 x Durchmesser der Schnecke zu wählen.

Um die Zylindertemperaturen, insbesondere der Ausgangszone des Extruders auf das verfahrenstechnisch erforderliche Niveau einzustellen, ohne dabei die Eingangszone zu beeinflussen, kann der Extruderzylinder aus mehreren Baueinheiten bestehen, die voneinander durch Isolierringe thermisch getrennt sind.

In weiterer Ausgestaltung der Erfindung ist in den Spritzkopf des Extruders ein Druckstück eingesetzt, um die Mischungstemperatur der Kautschukmischung durch Anpassung bzw. Erhöhung des Druckes sowohl im Schneckenkanal als auch im Spritzkopf durch Umsetzung der Druckenergie weiter zu erhöhen und die mittlere Verweilzeit bei erhöhten Mischungstemperaturen zu verringern.

Des weiteren wird die Aufgabe gelöst durch ein Verfahren zur Aufbereitung von Kautschukmischungen in einem Schneckenextruder in Vorbereitung der Herstellung von Elastomerprodukten, insbesondere Elastomerprofilen, bei dem die Kautschukmischung dem Extruder zugeführt, in diesem plastifiziert und in einem Extrusionswerkzeug in die vom Einsatzzweck bestimmte Form gebracht wird, um danach durch Wärmeeintrag in das Extrudat einen Vulkanisationsprozess zu durchlaufen, indem erfindungsgemäß die Kautschukmischung auf dem Weg im Extruder im wesentlichen kontinuierlich aufgeheizt wird, so daß die Temperatur des Extrudates nach Verlassen des Extruders der Vulkanisationstemperatur angenähert wird.

Gemäß einer zweckmäßigen Verfahrensdurchführung wird zur Erhöhung der Extrudattemperatur auf annäherndes Vulkanisationsniveau eine Schnecke eingesetzt, deren Geometrie derart ausgelegt ist, daß eine Temperaturerhöhung in der Kautschukmischung durch Wärmedissipation eintritt.

Vorzugsweise wird dabei die Wärmedissipation in der Kautschukmischung durch erhöhte Drehzahl der Schnecke bei vergleichsweise geringem Durchsatz erreicht.

Die Erfindung soll nachfolgend anhand eines Ausführungsbeispieles näher erläutert werden.

Es zeigen:
- Fig. 1: einen Extruder mit erfindungsgemäßer Schnecke,
- Fig. 2: ein Kennfeld einer solchen Schnecke und
- Fig. 3: eine graphische Darstellung zu im stationären Betriebszustand des Extruders erzielbaren Mischungstemperaturen.

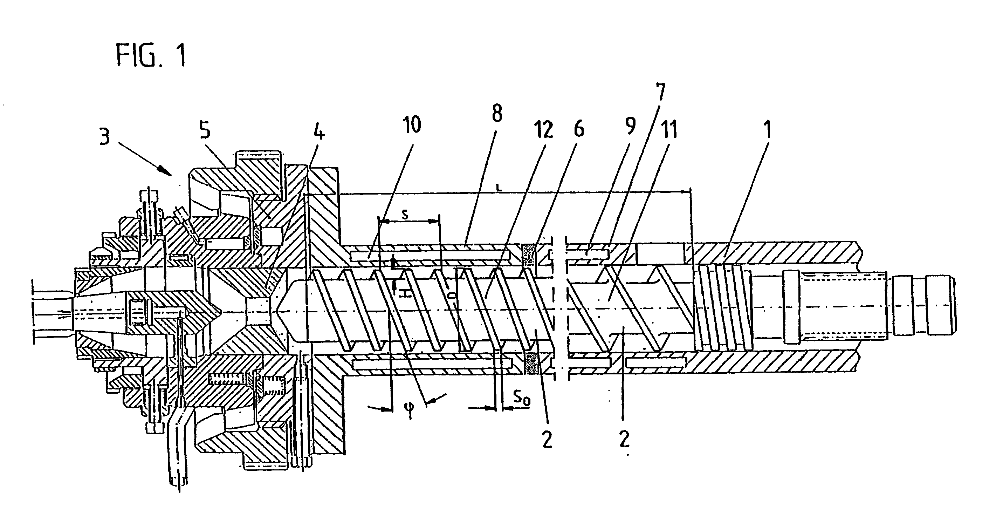

Der in Fig. 1 dargestellte Extruder besteht im wesentlichen aus einem Zylinder 1, einer im Zylinder 1 drehbar angeordneten Schnecke 2 und einem Spritzkopf 3 mit eingesetztem Druckstück 4 und Extrusionswerkzeug 5.

Der Zylinder 1 ist durch einen Isolierring 6 in eine Zylindereingangszone 7 und eine Zylinderausgangszone 8 geteilt, die Hohlräume 9 und 10 zur Temperierung des Zylinders 1 aufweisen.

Die Schnecke 2 besteht aus einer Schneckeneingangszone 11 und einer Schneckenausgangszone 12, die sich im Gangsteigungswinkel ϕ und in der Gangtiefe H voneinander unterscheiden. So weist die Schneckenausgangszone 12 gegenüber der Schneckeneingangszone 11 einen kleineren Gangsteigungswinkel ϕ von 7° bis 14° und eine kleinere Gangtiefe H auf.

Der strömungsgünstig geformte Spritzkopf 3 ermöglicht in Verbindung mit dem eingesetzten Druckstück 4 eine Anpassung bzw. Erhöhung des Druckes sowohl im Schneckenkanal als auch im Spritzkopf 3 durch Umsetzung der Druckenergie und eine Verringerung der mittleren Verweilzeit der Mischung im Extruder bei erhöhten Mischungstemperaturen.

Bei Betrieb des Extruders wird das Kautschukgemisch von der Eingangszone 11 der Schnecke 2 in Richtung der Ausgangszone 12 derselben gefördert, wobei durch eine erfindungsgemäße Auswahl von Gangsteigungswinkel ϕ und Gangtiefe H ein Überfahren der Zylinderausgangszone 8 durch die Zylindereingangszone 7 erreicht wird, so daß eine Verringerung von Druck- und Leckströmung eintritt und damit die thermische Prozessführung verbessert wird.

Des weiteren kann infolge der erfindungsgemäß eintretenden Vergrößerung des Oberflächen-/Volumenverhältnisses in der Ausgangszone 12 die Mischungstemperatur in den langsam fließenden Wandbereichen vergleichsweise genau kontrolliert werden.

Eine Schnecke 2, die die beschriebenen Wirkungen erbringt, hat beispielsweise folgende Abmessungen:

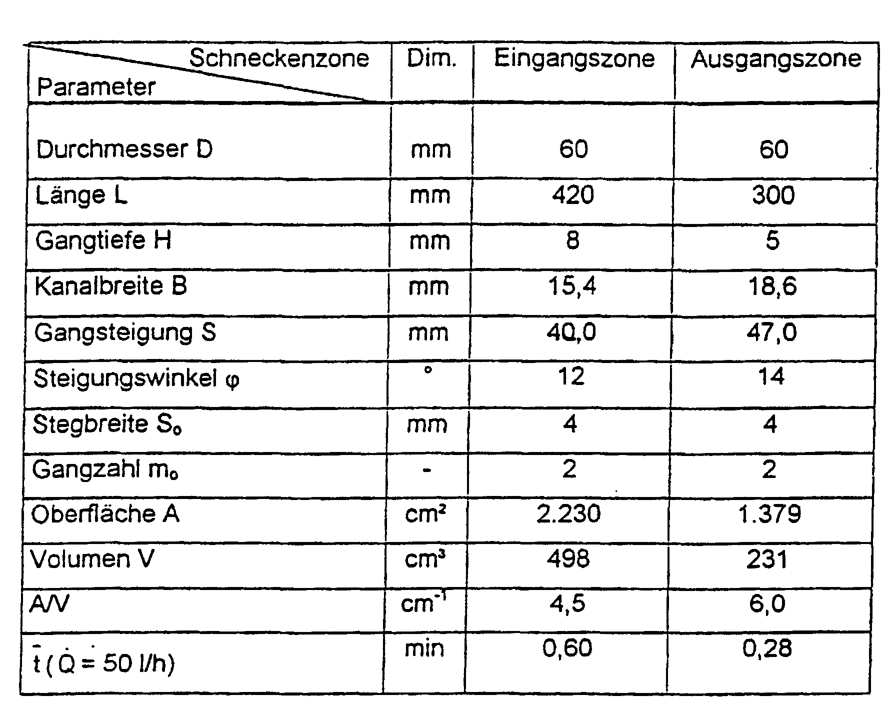

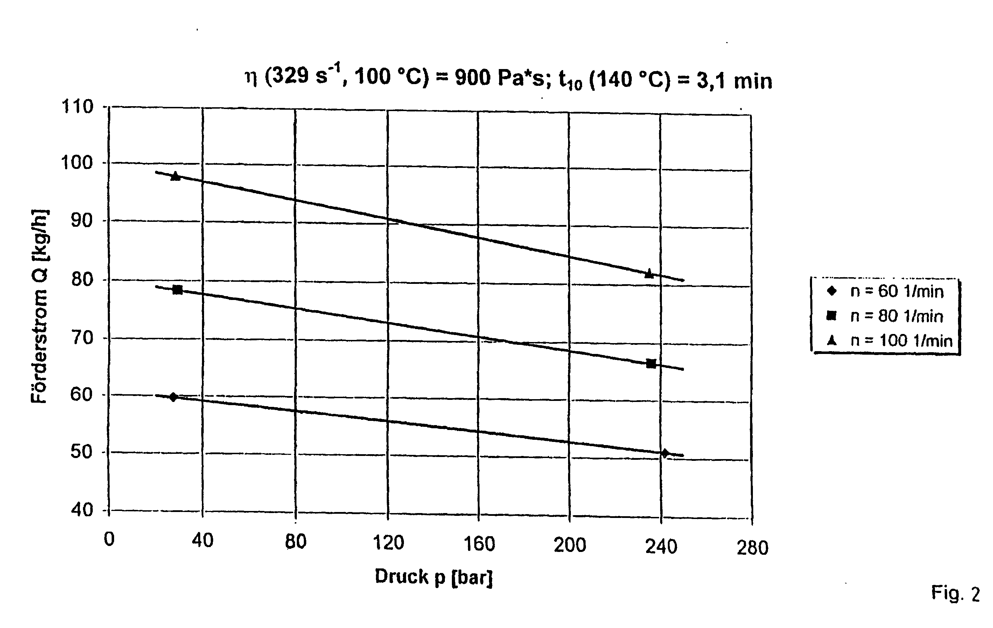

In Fig. 2 ist das Kennfeld einer solchen Schnecke 2 als Förderstrom über dem Druck dargestellt. Als Kautschukmischung wurde eine Mischung auf Basis von EPDM verwendet. Unterschiedliche Kennlinien beziehen sich, wie aus Fig. 2 erkennbar, auf unterschiedliche Drehzahlen der Schnecke 2. Das Vernetzungsverhalten der Kautschukmischung sollte dabei so eingestellt sein, daß eine 10 %ige Vernetzung bei 140° C nach mehr als 3 Minuten erreicht wird.

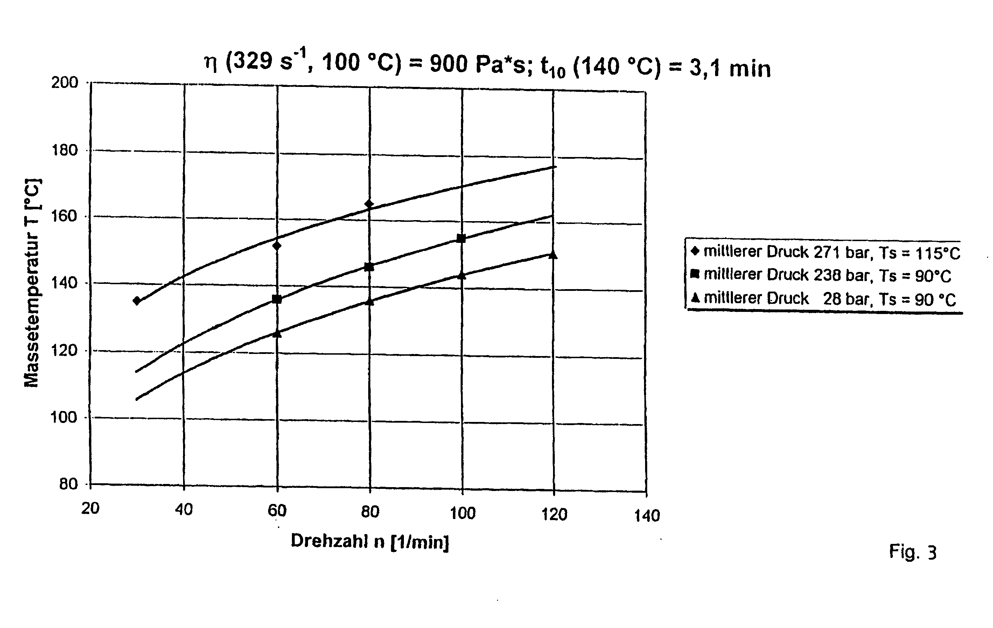

Die bei Betrieb des Extruders mit erfindungsgemäß ausgeführter Schnecke 2 erreichbaren Massetemperaturen sind in Abhängigkeit von den Drehzahlen der Schnecke 2 bei unterschiedlichen Drücken und Temperaturen für eine Mischung auf Basis EPDM in Fig. 3 dargestellt.

## Patentansprüche

1. Extruder zur Aufbereitung von Kautschukmischungen für Elastomerprodukte, insbesondere kontinuierlich hergestellte Elastomerprofile mit einem Zylinder (1), einer im Zylinder (1) drehbar gelagerten Schnecke (2) zum Einziehen, Fördern und Homogenisieren der Kautschukmischung und einem Spritzkopf (3) mit eingesetztem Extrusionswerkzeug (5),
**dadurch gekennzeichnet,**
**dass** durch Auswahl von Gangsteigungswinkel und Gangtiefe der Schnecke (2) im Extruder eine Eingangszone (7) mit ansteigendem Druck in der Kautschukmischung und eine Ausgangszone (8) mit konstantem bzw. fallendem Druck entsteht, wodurch die Kautschukmischung auf ihrem Weg zum Extrusionswerkzeug (5) durch Wärmedissipation eine Temperaturerhöhung derart erfährt, dass eine Annäherung der Temperatur des Extrudates an die Vulkanisationstemperatur erfolgt.

2. Extruder nach Anspruch 1,
**dadurch gekennzeichnet,**
**dass** die Extruderschnecke (2) in Abhängigkeit von deren Durchmesser mehrgängig ausgebildet ist, wobei die Gangzahl bei Vergrößerung des Durchmessers der Schnecke (2) steigt.

3. Extruder nach Anspruch 1 oder 2,
**dadurch gekennzeichnet,**
**dass** die Extruderschnecke (2) als Minderleistungsschnecke mit kleinem Gangsteigungswinkel ϕ in der Ausgangszone (12) ausgeführt ist

4. Extruder nach Anspruch 3,
**dadurch gekennzeichnet,**
**dass** der Gangsteigungswinkel ϕ in der Ausgangszone (12) ca. 7° bis 14° beträgt.

5. Extruder nach einem der Ansprüche 1 - 4,
**dadurch gekennzeichnet,**
**dass** die Ausgangszone (12) der Extruderschnecke (2) eine kleine Gangtiefe H aufweist.

6. Extruder nach Anspruch 5,
**dadurch gekennzeichnet,**
**dass** die Gangtiefe H kleiner als 0,15 x Durchmesser der Schnecke (2) ist.

7. Extruder nach einem der Ansprüche 1 - 6,
**dadurch gekennzeichnet,**
**dass** der Zylinder (1) aus mindestens zwei Baueinheiten besteht, die durch isolierringe (6) zur thermischen Entkopplung von einander getrennt sind.

8. Extruder nach einem der Ansprüche 1 - 7,
**dadurch gekennzeichnet,**
**dass** in den Spritzkopf (3) ein Druckstück (4) zur Verringerung des freien Volumens und ggf. Erhöhung des Druckes eingesetzt ist.

9. Verfahren zur Aufbereitung von Kautschukmischungen in einem Schneckenextruder in Vorbereitung der Herstellung von Elastomerprodukten, insbesondere Elastomerprofilen, bei dem die Kautschukmischung dem Extruder zugeführt, in diesem plastifiziert und in einem Extrusionswerkzeug (5) in die vom Einsatzzweck bestimmte Form gebracht wird, um danach durch Wärmeeintrag in das Extrudat einen Vulkanisationsprozess zu durchlaufen,
**dadurch gekennzeichnet,**
**dass** die Kautschukmischung im Extruder von einer Eingangszone (11) einer Schnecke (2) unter ansteigendem Druck der Kautschukmischung in Richtung einer Ausgangszone (12) der Schnecke (2) gefördert wird, die sie mit konstantem bzw. fallendem Druck durchläuft, wobei die Zylinderausgangszone (8) von der Zylindereingangszone (7) durch geeignete Wahl von Gangsteigungswinkel und Gangtiefe überfahren wird und die Kautschukmischung durch Wärmedissipation im wesentlichen kontinuierlich aufgeheizt wird, so dass die Temperatur des Extrudates nach Verlassen des Extruders der Vulkanisationstemperatur angenähert wird.

10. Verfahren nach Anspruch 9,
**dadurch gekennzeichnet,**
**dass** die Temperaturerhöhung der Kautschukmischung im wesentlichen durch erhöhte Drehzahl der Schnecke (2) bei vergleichsweise geringem Durchsatz erreicht wird.

## Claims

1. Extruder for processing rubber mixtures for elastomeric products, in particular continuously produced elastomeric profiles, comprising a cylinder (1), a screw (2) rotatably supported in the cylinder (1) for feeding, conveying, and homogenising the rubber mixture, and an extrusion die (3) with incorporated extrusion tool (5), **characterised in that** by selecting the helix angle and thread depth of the screw (2) an entry zone (7) is produced in the extruder with increasing pressure in the rubber mixture and an exit zone (8) is produced with constant or decreasing pressure, so the rubber mixture is subjected to a rise in temperature during its advance to the extrusion tool (5) owing to heat dissipation such that the temperature of the extrudate approximates the vulcanising temperature.

2. Extruder according to claim 1, **characterised in that** the extruder screw (2) is constructed as a multithread screw as a function of its diameter, with the number of threads increasing as the diameter of the screw (2) increases.

3. Extruder according to claim 1 or 2, **characterised in that** the extruder screw (2) in the exit zone (12) is configured as a screw of minimum output with a small helix angle ϕ.

4. Extruder according to claim 3, **characterised in that** the helix angle ϕ in the exit zone (12) is about 7° to 14°.

5. Extruder according to any of claims 1 to 4, **characterised in that** the exit zone (12) of the extruder screw (2) has a small thread depth H.

6. Extruder according to claim 5, **characterised in that** the thread depth H is less than 0.15 x diameter of the screw (12).

7. Extruder according to any of claims 1 to 6, **characterised in that** the cylinder (1) consists of at least two subassemblies which are separated from each other by insulation rings (6) for thermal de-coupling.

8. Extruder according to any of claims 1 to 7, **characterised in that** a pressure piece (4) is inserted in the extrusion die (3) for reducing the free volume and optionally increasing the pressure.

9. Method for processing rubber mixtures in a screw extruder in preparation for the production of elastomeric products, in particular elastomeric profiles, in which the rubber mixture is fed to the extruder, is plasticised therein and is shaped in an extrusion tool (5) into the form determined by the intended use, in order to then pass through a vulcanising process by application of heat in the extrudate, **characterised in that** the rubber mixture is advanced in the extruder from an entry zone (11) of a screw (2) with increasing pressure of the rubber mixture in the direction of an exit zone (12) of the screw (2), through which the rubber mixture passes at constant or decreasing pressure, the cylinder exit zone (8) being overshot by the cylinder entry zone (7) by suitable selection of helix angle and depth of thread and the rubber mixture being substantially continuously heated owing to heat dissipation, so the temperature of the extrudate after leaving the extruder approximates the vulcanising temperature.

10. Method according to claim 9, **characterised in that** the increase in temperature of the rubber mixture is substantially achieved by increasing the speed of the screw (2) while retaining a comparatively low output.

## Revendications

1. Extrudeuse pour la préparation de mélanges de caoutchouc pour des produits élastomères, en particulier des profilés élastomères fabriqués de façon continue avec un cylindre (1), une vis sans fin (2) logée de façon pivotante dans le cylindre (1) pour l'introduction, le transport et l'homogénéisation du mélange de caoutchouc et une tête d'injection (3) avec un outil d'extrusion (5) introduit,
**caractérisée en ce que**,
par le choix de l'angle de pente du pas et de la profondeur de pas de la vis sans fin (2), il se forme dans l'extrudeuse une zone d'entrée (7) avec une pression croissante dans le mélange de caoutchouc et une zone de sortie (8) avec une pression constante ou décroissante, de sorte que le mélange de caoutchouc subit une augmentation de température sur son parcours jusqu'à l'outil d'extrusion (5) du fait de la dissipation de chaleur, de telle sorte que la température du produit d'extrusion se rapproche de la température de vulcanisation.

2. Extrudeuse selon la revendication 1,
**caractérisée en ce que**
la vis d'extrudeuse (2) est conçue avec plusieurs filets en fonction de son diamètre, le nombre de pas augmentant dans le cas d'une augmentation du diamètre de la vis sans fin (2).

3. Extrudeuse selon la revendication 1 ou 2,
**caractérisée en ce que**
la vis d'extrusion (2) est réalisée comme une vis sans fin de rendement inférieur avec un petit angle de pente de pas ϕ dans la zone de sortie (12).

4. Extrudeuse selon la revendication 3,
**caractérisée en ce que**
l'angle de pente de pas ϕ dans la zone de sortie (12) est d'environ 7° jusqu'à 14°.

5. Extrudeuse selon l'une quelconque des revendications 1 à 4,
**caractérisée en ce que**
la zone de sortie (12) de la vis d'extrudeuse (2) présente une petite profondeur de pas H.

6. Extrudeuse selon la revendication 5,
**caractérisée en ce que**
la profondeur de pas H est inférieure à 0,15 fois le diamètre de la vis sans fin (2).

7. Extrudeuse selon l'une quelconque des revendications 1 à 6,
**caractérisée en ce que**
le cylindre (1) se compose d'au moins deux modules, qui sont séparés par des bagues isolantes (6) pour le découplage thermique des unes par rapport aux autres.

8. Extrudeuse selon l'une quelconque des revendications 1 à 7,
**caractérisée en ce que**
une pièce de pression (4) est mise en place dans la tête d'injection (3) pour la réduction du libre volume et éventuellement l'augmentation de la pression.

9. Procédé pour la préparation de mélanges de caoutchouc dans une extrudeuse à vis dans le cadre de la préparation de la fabrication de produits élastomères, en particulier de profilés élastomères, avec lequel le mélange de caoutchouc est amené à l'extrudeuse, plastifié dans celle-ci et amené dans un outil d'extrusion (5) dans la forme définie par l'utilisation, afin de passer ensuite par un processus de vulcanisation par apport de chaleur dans le produit d'extrusion,
**caractérisé en ce que**
le mélange de caoutchouc est transporté dans l'extrudeuse d'une zone d'entrée (11) d'une vis sans fin (2), avec l'augmentation croissante du mélange de caoutchouc, en direction d'une zone de sortie (12) de la vis sans fin (2), qu'elle traverse avec une pression constante ou décroissante, la zone de sortie de cylindre (8) étant dépassée par la zone d'entrée de cylindre (7) par un choix approprié de l'angle du pas de pente et de la profondeur de pas et le mélange de caoutchouc étant réchauffé de façon sensiblement continue du fait de la dissipation de chaleur, de sorte que la température du produit d'extrusion se rapproche de la température de vulcanisation après la sortie de l'extrudeuse.

10. Procédé selon la revendication 9,
**caractérisé en ce que**
l'élévation de température du mélange de caoutchouc est obtenue essentiellement par le régime élevé de la vis sans fin (2) avec un débit comparativement faible.
